# EUROPEAN PATENT APPLICATION

(11) **EP 0 825 538 A1**
(43) Date of publication of application: **25.02.1998**
(21) Application number: 97113770.8
(22) Date of filing: 08.08.1997
(51) Int. Cl.: G06F 12/08

(54) **Cache memory system**

(30) Priority: 16.08.1996 US 699133
(71) Applicant: LSI LOGIC CORPORATION, Milpitas, CA 95035 (US)
(72) Inventor: Vainsencher, Leonardo, San Jose, California 95124 (US)
(74) Representative: Schoppe, Fritz, Dipl.-Ing.

(57) **Abstract**

A cache memory that requires less cache-to-memory bandwidth is disclosed. The cache memory uses a delayed write policy without incurring the penalty of transferring an entire memory block into the cache when a write miss occurs. Further, modification indicators are provided for each byte of data in the cache lines so that memory traffic is reduced by reading or writing back only needed bytes. Additionally, the invention provides dynamic selection of invalidate or update coherency policy based on data memory write port availability, which increases the hit-to-miss ratio of the cache. These features contribute significantly to lowering cache-to-main memory bandwidth requirements by CPU operations.

## Description

### BACKGROUND OF THE INVENTION

### 1. Field of the Invention

The present invention relates to a cache memory system, and more particularly, to a cache memory system using delayed write back.

### 2. Description of the Related Art

For performance and costs reasons, memory systems for computers are designed with a hierarchy of memories of different speed and sizes. Generally speaking, the smaller the memory the faster its speed. The lowest level in the memory hierarchy is closest to a processor (e.g., CPU) and is referred to as a cache (or cache memory). A higher level in the memory hierarchy is a main memory (e.g., DRAM).

A cache has a number of cache lines which hold blocks of data. Caches can be direct mapped (one-way set associative), set associative or fully associative. The associativity is an indication of how many cache lines a block of data can be placed within the cache. Each block of data stored in the cache has an address tag. To determine if a particular block is in the cache, the address tags for each cache line within the cache that might contain the block are compared with the address (typically a portion of the address) of an access request from the processor.

Write policies for caches include write through and write back. With a write through cache, data is written to both the cache and the main memory. With a write back cache, only those blocks that have been modified are written to main memory when they are being replaced in the cache. Conventionally, a dirty bit is provided for each cache line. The dirty bit is used to reduce the frequency of writing back blocks to the main memory when the data in the cache line has not been modified since it was read in from the main memory. A write buffer is typically used to reduce write stalls by a delayed write policy. Write back caches usually use a write allocate write-miss policy in which the entire block is loaded before a write request can proceed. On the other hand, write through caches usually use a write around write-miss policy in which the block is written to main memory but not loaded into the cache. For additional details on cache memories, see e.g., Hennessy and Patterson, "Computer Architecture A Quantitative Approach," Morgan Kaufman Publishers, Inc., 1990.

One problem with existing caches is that they often demand a great deal of cache-to-memory bandwidth. Namely, caches implementing a delayed write policy must read in an entire cache line from main memory following a cache miss. Typically, the cache line stores 4 to 32 words. Hence, if the processor only wants to write to the cache line once, there is a large overhead. Further, if the processor wishes to read or wnte to other memory blocks that are mapped to the dirty cache lines, then a large amount of cache-to-memory traffic (bandwidth) is required. Specifically, the entire memory block in the dirty cache line must be written back to the main memory and then the entire missing memory block read in from the main memory. Although a write buffer can provide some relief to the bandwidth demands of write back operations, the bandwidth demand remain a substantial burden on the performance of existing caches.

### SUMMARY OF THE INVENTION

Broadly speaking, the invention is a cache memory that requires less cache-to-memory bandwidth. The cache memory uses a delayed write policy without incurring the penalty of transferring an entire memory block into the cache when a write miss occurs. Further, since modification indicators are provided for each byte of data in the cache lines, memory traffic is reduced because only needed bytes are read or written back. Additionally, the invention provides dynamic selection of invalidate or update coherency policy based on data memory write port availability, which increases the hit-to-miss ratio of the cache. These features contribute significantly to lowering cache-to-main memory bandwidth requirements by CPU operations.

The invention may be implemented in numerous ways, including as a system and a method. Several implementations are discussed below.

As a cache memory system, an embodiment of the invention includes a cache data storage for storing bytes of data, the cache data storage stores a plurality of cache blocks with each of the cache blocks including a plurality of the bytes of data; a tag storage for storing an address tag for each of the cache blocks stored in the cache data storage; a read indicator storage for storing a read indicator for each of the cache blocks stored in the cache data storage; a modification indicator storage for storing a modification indicator for each byte within each of the cache blocks stored in the cache data storage; and a cache controller for controlling read and write operations of the cache memory system.

In one embodiment, the cache memory system has various operations. First, during a write request from a processing unit, the cache controller operates the cache memory system using a write allocate write-miss policy where following a write miss a cache line is allocated but the memory block in the main memory corresponding to the write request is not read into the cache memory system instead the bytes of the write request are written to the allocated cache line. Second, during a read request from the processing unit, the cache controller operates the cache memory system using a read-miss policy where following a read miss a cache line is allocated and the bytes of data within the memory block in the main memory that are requested by the read request are read first regardless of their position in the memory block so that the read request is satisfied early. Third, with the cache memory system being operated as a write back cache, when writing back bytes of data from the cache data storage to the main memory only those bytes that have the corresponding modification indicator set are written back to the main memory.

As a method for operating a cache memory system including data storage, tag storage, and modification indicator storage for storing modification indicators for each byte in the data storage, an embodiment of the invention includes the operations of: receiving a write request to write data from a given memory location, determining whether the memory location is in the cache memory system, and then performing differently depending on these determinations. When the memory location is in the cache memory system, the method performs the operations of writing the data of the write request to a cache block within the data storage that corresponds to the memory location, and setting the modification indicators corresponding to the bytes of data written in the data storage. When the memory location is not in the cache memory system, the method performs the operations of selecting a cache block to be removed from the cache memory system to make room in the cache memory system for the cache block associated with the memory location of the write request, writing back to main memory those bytes of data in the selected cache block that have the corresponding modification indicator set and then resetting the corresponding modification indicators, writing the data of the write request to the cache block that corresponds to the memory location of the write request, and setting the modification indicators corresponding to the bytes in the data storage written to.

As a method for operating a cache memory system including data storage, tag storage, and modification indicator storage for storing modification indicators for each byte in the data storage, another embodiment of the invention includes the operations of: receiving a read request to read data from a given memory location, determining whether the memory location is in the cache memory system, determining whether the requested bytes of data by the read request have their corresponding modification indicator set, and then performing differently depending on these determinations. When the memory location of the read request is in the cache memory system and when the requested bytes of data have their corresponding modification indicator set, the method performs the operations of reading the requested bytes of data from a cache block within the cache memory system that corresponds to the memory location of the read request. When the memory location is not in the cache memory system, the method performs the operations of selecting a cache block to be removed from the cache memory system to make room in the cache memory system for the cache block associated with the memory location of the write request, writing back to main memory those bytes of data in the selected cache block that have their corresponding modification indicator set and then resetting the corresponding modification indicators unless the memory location is in the selected cache block, and thereafter reading the bytes of data for the entire selected cache block. When the memory location is in the cache memory system but the requested bytes of data do not have the corresponding modification indicator set, the method performs the operation of reading only those bytes in the selected cache block that have the corresponding modification indicator reset when the memory location is in the selected cache block.

Other aspects and advantages of the invention will become apparent from the following detailed description and the accompanying drawings which explain by way of example the principles of the invention.

### BRIEF DESCRIPTION OF THE DRAWINGS

The present invention will be readily understood by the following detailed description in conjunction with the accompanying drawings, wherein like reference numerals designate like structural elements, and in which:
FIG. 1 is a block diagram of a cache memory system according to an embodiment of the invention;
FIGS. 2A, 2B and 2C are diagrams of representative data structures for tag/control memory, byte validity memory, and data memory of the cache memory system;
FIG. 3 is a flow diagram of read processing according to an embodiment of the invention;
FIG. 4 is a flow diagram of read hit processing according to an embodiment of the invention;
FIG. 5 is a flow diagram of read miss processing according to an embodiment of the invention;
FIG. 6 is a flow diagram of a select set routine according an embodiment of the invention;
FIG. 7 is a flow diagram of write back processing according to an embodiment of the invention;
FIG. 8 is a flow diagram of write processing according to an embodiment of the invention;
FIG. 9 is a flow diagram of write miss processing according to an embodiment of the invention; and
FIG. 10 is a flow diagram of snoop processing according to an embodiment of the invention.

### DETAILED DESCRIPTION OF THE INVENTION

During read requests by a processor (e.g., CPU), a cache controller checks whether or not the memory location requested by the read request is present in the cache. The memory location is present if there is a tag match for the corresponding cache line and either the cache line is in the valid state or if the corresponding modification indicators are set. If the memory location is present in the cache, data is returned immediately to the processor, otherwise a cache miss occurs.

According to the invention, there are two kinds of cache misses. The first type of cache miss occurs when no part of the memory block corresponding to the memory location is present in the cache. In this case, the cache line is fetched in its entirety from the main memory with the requested memory location read first. By reading the memory location requested by the read request first from main memory, the data requested by the read request can be made available as soon as these bytes are read without having to wait until the entire cache line is read in from the main memory. The second kind of cache miss occurs when the memory block corresponding to the memory location is present in the cache, but the memory location requested by the read request is not valid. Modification indicators are provided for each byte stored in the cache to indicate whether the corresponding byte is valid. When the modification indicators for the requested bytes are not set following a cache miss, only the bytes for which the corresponding modification indicators are not set are fetched from the main memory with the requested bytes read first.

During a write request by a processor, if the memory block corresponding to the memory location of the write request is present in the cache, data is immediately written into the cache and the corresponding modification indicators are set. On the other hand, if the memory block corresponding to the memory location is not in the cache a write miss occurs. When a write miss occurs, a cache line is allocated. If the allocated cache line is invalid, or has all its modification indicators cleared (not set), then the data is immediately written into the cache, the appropriate modification indicators are set, and the tag is updated. Note that the in this case, the cache line becomes "partially valid" which means only those bytes having the corresponding modification indicator set are valid. Also note that in this case contrary to conventional cache implementations, the associated memory block is not fetched from the main memory.

During snoop requests, the cache controller checks whether or not the memory block corresponding to the memory location of the snoop request is present in the cache. The memory block corresponding to the memory location of the snoop request is determined to be present if there is a tag match for the corresponding cache line and the cache line is in the valid state (snoop hit). With a snoop hit, if the write port of the cache is not being used by a write request by the processor, the cache controller updates the cache with the snoop data. However, if the write port of the cache is busy when a snoop hit occurs, the cache controller invalidates the corresponding cache line.

The invention described above allows the use of delayed write policy without incurring the penalty of transferring an entire memory block into the cache when a write miss occurs. Further, since modification indicators are provided for each byte of data in the cache lines, memory traffic is minimized because only needed bytes are read or written back. Additionally, the invention produces dynamic selection of invalidate or update coherency policy based on data memory write port availability, which increases the hit-to-miss ratio of the cache. These features contribute significantly to lowering cache-to-main memory bandwidth requirements by CPU operations.

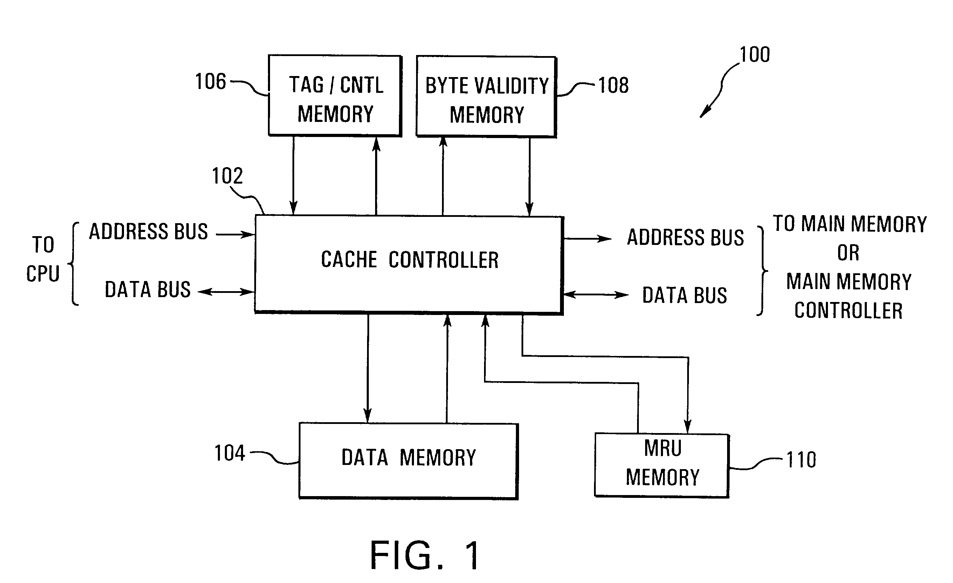

Embodiments of the invention are discussed below with reference to FIGS. 1-10. However, those skilled in the art will readily appreciate that the detailed description given herein with respect to these figures is for explanatory purposes as the invention extends beyond these limited embodiments.

FIG. 1 is a block diagram of a cache memory system 100 according to an embodiment of the invention. The cache memory system 100 includes a cache controller 102 which controls the operation of the cache memory system 100. The cache memory system 100 typically resides in a computer system in between a processing unit (e.g., a CPU) and main memory (e.g., RAM). Normally, the cache controller 102 is coupled to the processing unit by way of an address bus and a data bus, and coupled to the main memory by way of an address bus and a data bus. In one embodiment, a main memory controller is coupled between the cache controller 102 and the main memory. When the processing unit issues a read request or a write request to the main memory, the memory request is sent to the cache controller 102 which determines whether or not the cache memory system 100 can satisfy the memory request without having to access the main memory. The advantage of not having to access the main memory is that the processing unit need not wait as long for completion of the memory request because the cache memory system 100 has significantly a lower access time than does the main memory. An external device (not shown) may also be coupled to the cache memory system 100 or the main memory controller. The external device is another device (besides the processing unit) that attempts to access memory via the cache memory system 100 or the main memory controller.

The cache memory system 100 also includes a data memory 104, a tag/control memory 106. a byte validity memory 108 and a most recently used (MRU) memory 110. Since the cache controller 102 controls the operation of the cache memory system 100, the cache controller 102 is coupled to the data memory 104, the tag/control memory 106, the byte validity memory 108 and the MRU memory 110. The data memory 104 stores data which represents a small subset of the data stored in main memory. That is, the data stored in the data memory 104 is associated with certain memory locations in the main memory. In particular, the data memory 104 has a number of cache lines, each of which is capable of storing a block of memory. The tag/control memory 106 stores address tags and control information for each cache line within the data memory 104. The byte validity memory 108 stores modification indicators for each byte of data within each cache line of the data memory 104. The modification indicators for each byte indicate whether or not the byte is valid. A valid byte means that since reading the byte from main memory into the data memory 104, the byte has been written to by the processing unit or an external device. A valid byte is also referred to as a dirty byte or a modified byte. The cache memory system 100 also follows a write-back policy in which data from the data memory 104 for a given cache line is written back to the main memory only when the cache line is going to be reallocated to other memory locations. Hence, a byte having its corresponding modification indicator set to a first value (e.g., "1") indicates that the byte stored in the data memory 104 is more recent than the corresponding byte stored in the main memory. This condition occurs when the byte has been written since being read into the data memory from the main memory. The MRU memory 110 stores MRU information concerning the cache lines of the data memory 104. The cache controller 102 uses the MRU information when allocating cache lines.

Given the many tradeoffs involved in designing a cache memory, the size, speed and cost of the cache memory system 100 will vary with implementation. However, in an exemplary implementation of the cache memory system 100, the data memory 104 stores eight words in a single cache line and is a two-way set associative memory. However, it should be realized that the cache memory system 100 can include many different cache sizes and the set associativity can vary from no associativity to full associativity.

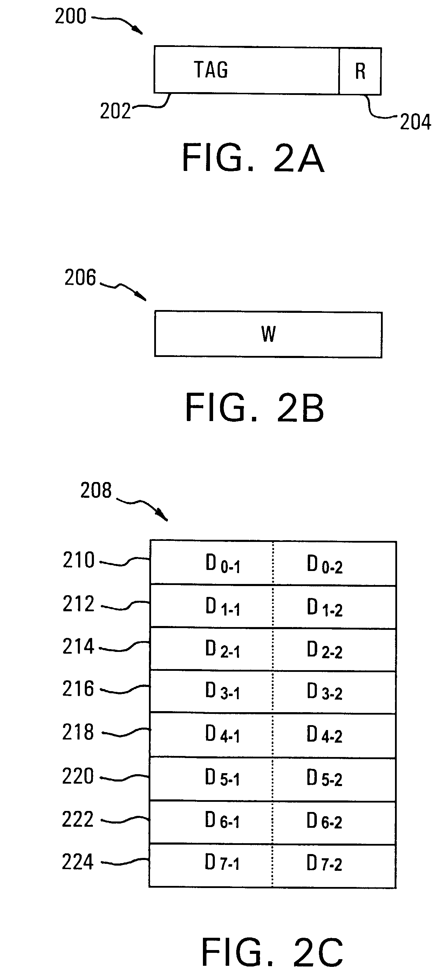

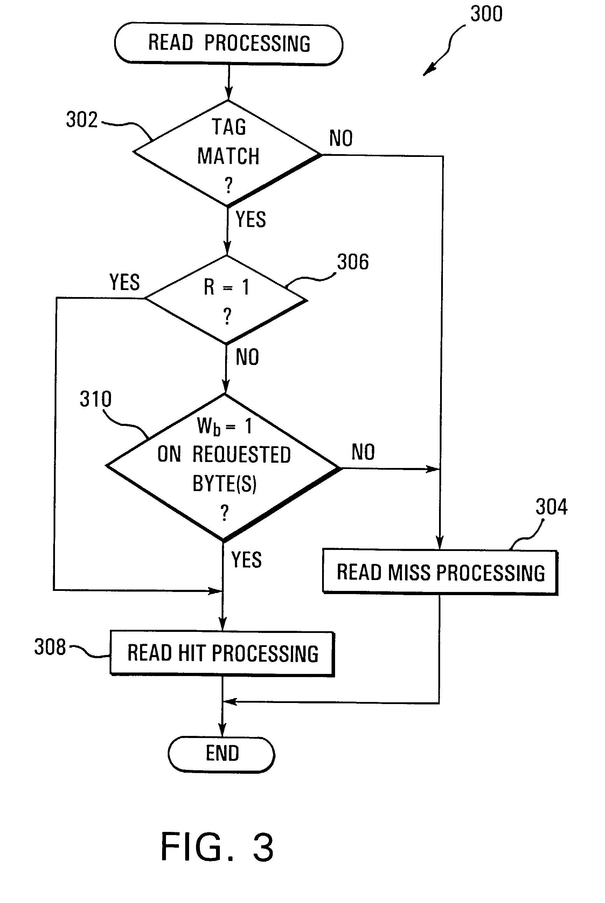

FIGS. 2A, 2B and 2C are diagrams of representative data structures for the tag/control memory 106, the byte validity memory 108, and the data memory 104. In particular, FIG. 2A illustrates a data structure 200 having a tag portion 202 and a read bit (R) 204. The data structure 200 is a representative entry in the tag/control memory 106 for each cache line in the data memory 104. The tag portion 202 stores the address tag for the data being held in the corresponding cache line in the data memory 104, and the read bit (R) 204 represents the control information for each cache line in the data memory 104. In the exemplary implementation, the tag portion 202 would include 13-bits and the read bit (R) 204 would include a single bit. FIG. 2B illustrates a data structure 206 that would be used in the byte validity memory 108 to store the modification indicators (W). The data structure 206 stores modification indicators (W) for each byte within a cache line of the data memory 104. In this exemplary implementation, the data structure 206 would include 16-bits of validity information, one bit for each byte of a 16-byte (8 word) cache line. FIG. 2C illustrates a data structure 208 associated with the data memory 104. The data structure 208 represents a single cache line within the data memory 104. The data structure 208 includes eight (8) words 210-224. Each word 210-224 includes a first byte and a second byte. For example, the word 210 in the data structure 208 includes a first byte D₀₋₁ and a second byte D₀₋₂. When the cache controller 102 receives a read request from the processing unit, read processing is invoked. On the other hand, when the cache controller 102 receives a write request from the processing unit, write processing is performed. Also in the case in which an external device issues a write request to the main memory, snoop processing is performed. The read processing, the write processing and the snoop processing performed by the cache controller 102 are described in detail below with reference to flow diagrams illustrated in FIGS. 3-10.

FIG. 3 is a flow diagram of read processing 300 according to an embodiment of the invention. The read processing 300 is preferably performed by the cache controller 102 illustrated in FIG. 1.

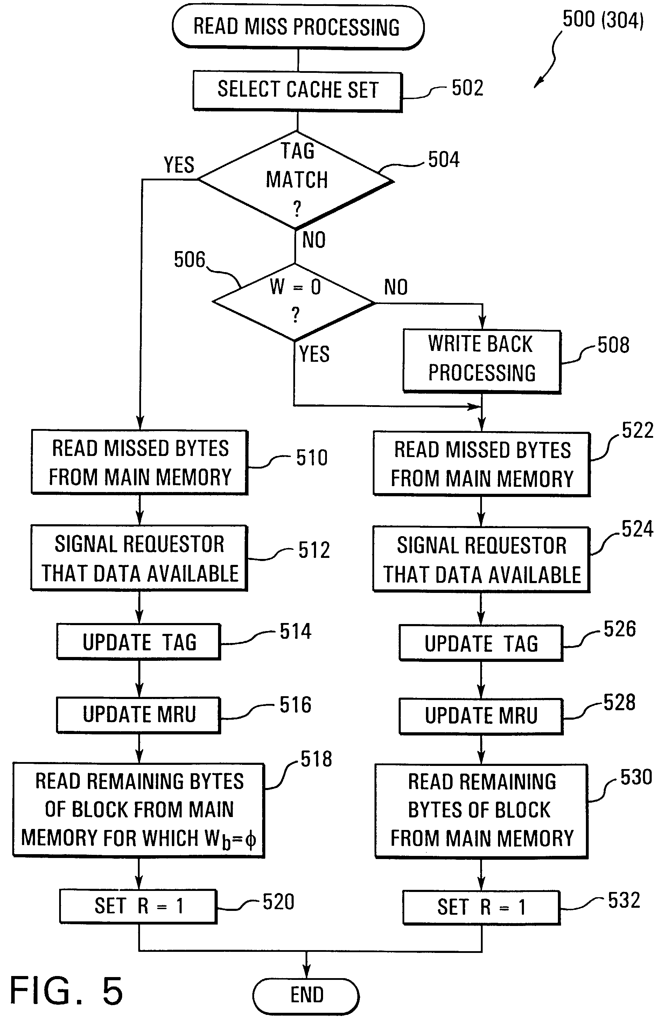

The read processing 300 begins with a decision block 302 that determines whether the address of the read request matches a tag within the tag/control memory 106 of the cache memory system 100. In the case of set associative memory, the decision block 302 is in effect checking for a tag match in any of the sets. If none of the tags in the tag/control memory 106 match the corresponding bits of the address of the read request, a read miss occurs and, as such, read miss processing 304 is performed. The read miss processing 304 is described in detail below with reference to FIG. 5. On the other hand, when there is an entry in the tag/control memory 106 that matches the corresponding bits of the address of the read request, a decision 306 then determines whether the entire cache line for the matching tag entry is valid. This decision 306 is made using the read bit (R) 204 stored in the tag/control memory 106. Namely, if *R* = 1, none of the bytes within the cache line have been modified since being read into the data memory 104, then entire cache line is valid. Hence, when *R =* 1, the read processing 300 performs read hit processing 308 because the appropriate requested data is both valid and available within the data memory 104 of the cache memory system 100. On the other hand, when R ≠ 1, the cache line is at best only partially valid. In this case, a decision 310 then determines whether the modification indicators (W_{b}) for the particular requested bytes by the read request are set. Here, the cache controller 102 obtains the modification indicators (W_{b}) associated with the particular bytes requested by the read request from the entry in the byte validity memory 108 that corresponds to the same cache line. For example, if the bytes requested of the read request are bytes D₃₋₁ and D₄₋₂ in the data memory 300 for a given cache line, then the modification indicators (W_{b}) for the seventh (W_{b-7}) and tenth bytes (W_{b-10}) are examined. In this implementation, the modification indicators (W_{b}) for each byte in a given cache line is an individual bit that indicates that the associated byte is valid when set to one. If the modification indicators are set for the requested bytes then the read processing 300 performs read hit processing 308 because the data in the data memory 104 is valid to the extent required by the read request. Otherwise, the read processing 300 performs read miss processing 304.

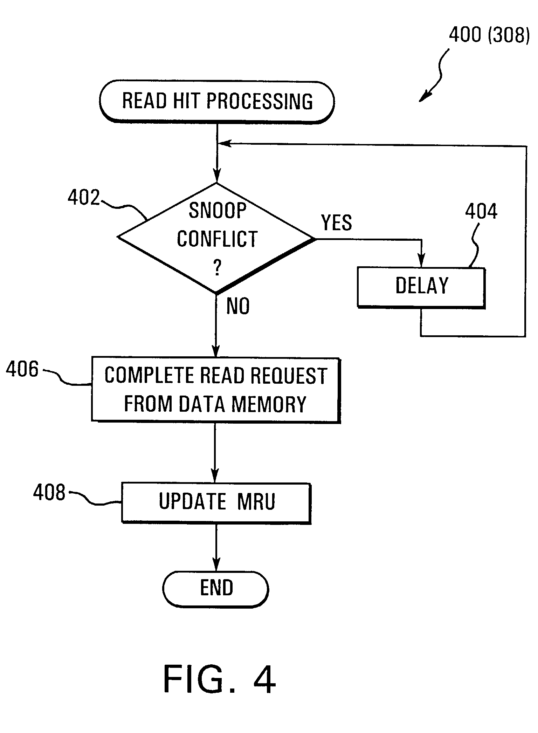

FIG. 4 is a flow diagram of read hit processing 400 according to an embodiment of the invention. The read hit processing 400 is a preferred implementation of the read hit processing 308 illustrated in FIG. 3.

The read hit processing 400 begins with a decision 402 that determines whether a snoop conflict exists. A snoop conflict will occur when an external device attempts to write to the same cache line (cache block) as the processing unit wants to read from in the same clock cycle. In this embodiment, it is an error if both the external device and the processing unit attempt to write to the same cache line (or cache block) in the same clock cycle (based on a one write port to the data memory assumption). Simultaneous reads from the processing unit and the external device are permissible (based on a two read ports to the data memory assumption). Hence, the decision 402 can be determined by evaluating whether the external device is issuing a write request and, if so, does the address of the write request by the external device match the address of the read request of the processing unit. In any case, if a snoop conflict is determined to exist, the read hit processing 400 for the read request by the processing unit is delayed 404 for a clock cycle. Following the delay, the decision 402 is repeated until the snoop conflict is removed. Normally, the snoop conflict, if present, will only last for a single clock cycle.

After the decision 402 determines that there is no snoop conflict, the read processing 400 completes 406 the read request by reading the requested data from the data memory 104. Then, the MRU memory 110 is updated 408 so that the set within the data memory 104 that was just used to read the data for the read request from is designated as the most recently used set. In the exemplary embodiment, the data memory 104 is two-way set associative in which case the entry in the MRU memory 110 need only distinguish between first and second sets which can be done with a single bit.

FIG. 5 is a flow diagram of read miss processing 500 according to an embodiment of the invention. The read miss processing 500 is the processing preferably performed by the read miss processing 304 illustrated in FIG. 3.

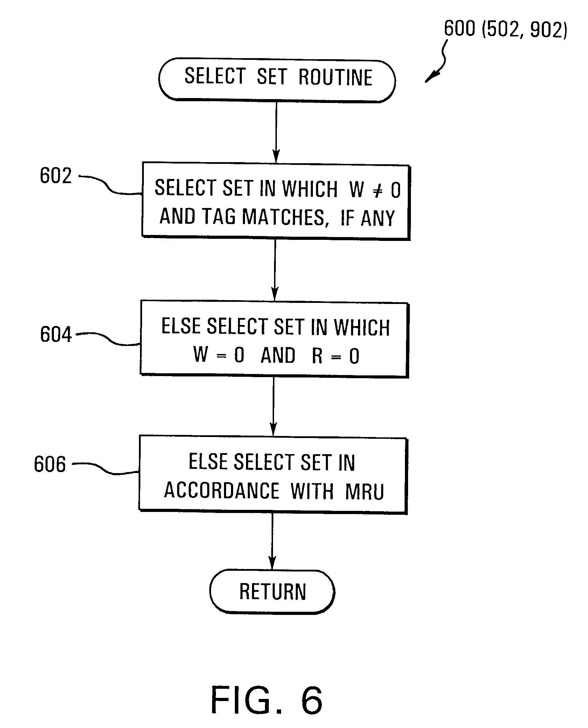

The read miss processing 500 initially selects 502 a cache set. In particular, in the exemplary embodiment with two-way set associative memory, the selection 502 is between the first cache set and the second cache set. The details on the selecting 502 operation are described in detail below with respect to FIG. 6. The selection 502 of the cache set does, however, select a cache line within the cache memory system 100 that is to be used to hold the memory location associated with the read request. Next a decision block 504 determines whether the address tag for the selected cache line matches the corresponding bits of the address of the read request.

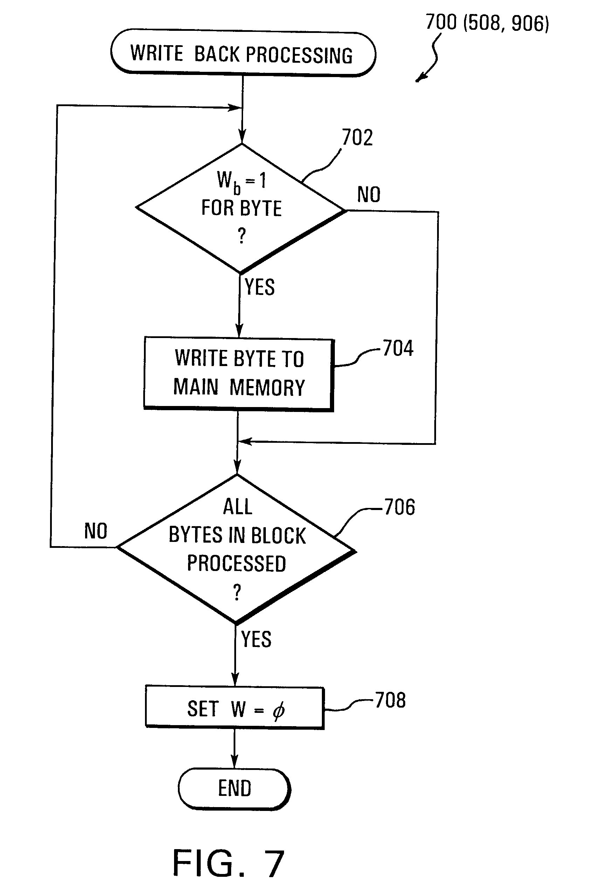

When the address tag does not match the corresponding bits of the address of the read request, then a decision block 506 determines whether the entry (modification indicator (W)) in the byte validity memory 108 corresponding to the selected cache line is at a predetermined value (e.g., "0") . When W = 0, the bytes within the selected cache line have not been modified since they have been read. In this case, there is no need to update the contents of the main memory with the contents of the selected cache line before reallocating the cache line. Hence, if neither V = 0 and the address tag does not match, then write back processing 508 is performed; otherwise, the write back processing 508 is bypassed. The write back processing 508 is described in detail below with reference to FIG. 7.

When the address tag does match the corresponding bits of the address of the read request, the selected cache line is the cache line associated with the memory location of the read request. There is no need to update the contents of the main memory with the contents of the selected cache line because the selected cache is the desired cache line and thus no reallocation is needed. In this case, blocks 506 and 508 are not performed. Following the decision block 504 in the case of an address tag match, the missed bytes associated with the read request are read 510 from the main memory. In this exemplary embodiment, the missed bytes (i.e., the bytes that caused the read miss) are either a single byte or two bytes (i.e., a word). Then, the processing unit (requester) is signaled 512 that the requested data is now available. The address tag associated with the selected cache line is updated 514. Technically, the updating 514 is not necessary since no cache line is being allocated, but cache controllers tend to perform such operations anyway. Next, the MRU is updated 516 to reflect the set of the data memory most recently used. The remaining bytes in the cache line (cache block) are read 518 from the main memory. Then, the read bit (R) for the selected cache line is also set 520 to one (1) because the cache line is completely valid. However, by reading only those of the remaining bytes for which *W*_{*b*} = 0, the reading 518 is performed in an efficient manner. Note that *W*_{*b*} = 0 refers to the modification indicator for a particular byte. The read miss processing 500 is then complete and ends for the case in which the selected cache line has an address tag that matches the appropriate bits of the read request.

On the other hand, in the case where there is no address tag match, following block 506 or 508, the read miss processing 500 reads 522 the missed bytes associated with the read request from the main memory. Then, the processing unit (requester) is signaled 524 that the requested data is now available. The address tag associated with the selected cache line is updated 526. Next, the MRU is updated 528 to reflect the set of the data memory most recently used. The remaining bytes in the cache line are read 530 from the main memory. Then, the read bit (R) for the selected cache line is set 532 to one because the cache line is completely valid. The read miss processing 500 is then complete and ends for the case in which the selected cache line has an address tag that does not match the appropriate bits of the read request.

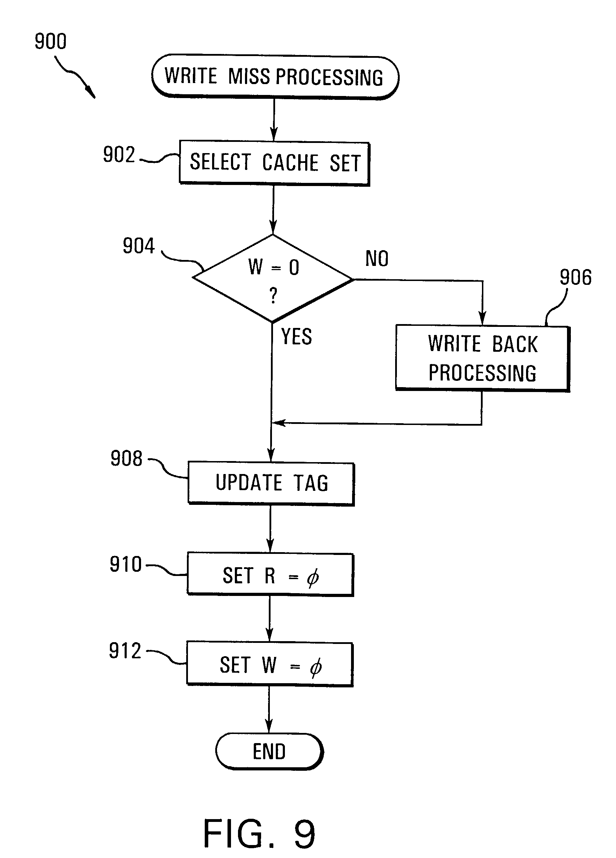

FIG. 6 is a flow diagram of a select set routine 600 according an embodiment of the invention. The select set routine 600 is the processing preferably performed by the cache set selection 502 illustrated in FIG. 5 and the cache set selection 902 illustrated in FIG. 9 to be discussed below. Generally speaking, the select set routine 600 operates to select a cache line from the cache lines available for the memory location of the request. In the exemplary embodiment, the cache memory system 100 is a two-way set associative memory; hence, the select set routine 600 described with reference to FIG. 6 need only select one of two sets.

The select set routine 600 initially selects 602 the set of the cache memory system 100, if any, in which *W* ≠ 0 and the address tag for the selected cache line matches the associated bits of the address of the request. If the selection block 602 does not produce the selected set, then the select set routine 600 selects 604 the set, if any, having an invalid cache line (i.e., *W* = 0 and *R* = 0). If neither the selection block 602 nor the selection block 604 operate to select the set, then the select set routine selects 606 the set in accordance with the corresponding MRU information. Namely, the set of the cache memory system 100 that is not the MRU is the set that is selected. In other words, the least most recently used set is selected when neither the selection block 602 nor the selection 604 operates to select the set. Following block 606, the select set routine is complete and returns.

FIG. 7 is a flow diagram of write back processing 700 according to an embodiment of the invention. The write back processing 700 corresponds to the processing performed by the write back processing 508 illustrated in FIG. 5 and the write back processing 906 illustrated in FIG. 9 to be discussed below.

The write back processing 700 initially determines 702 whether the modification indicator (W_{b}) for an initial byte of the cache line is equal to one. If so, the byte is written 704 to the main memory. This corresponds to the case in which the particular byte in question was modified since being read from the main memory. In this case, the data for the byte held in the data memory 104 is written back to the main memory so that the associated cache line can be reallocated. However, in the case in which the modification indicator (W_{b}) for the byte is not equal to one, there is no need to write back the data for the byte to the main memory. Hence, in this case, the block 704 is bypassed. Next, a decision 706 determines whether all of the bytes in the cache line have been processed. If all of the bytes in the cache line have not been processed, the write back processing 700 returns to repeat block 702 and subsequent blocks for another byte within the cache line. Once all of the bytes in the cache line have been processed, the modification indicators (W) for the entire cache line are set 708 to zero.

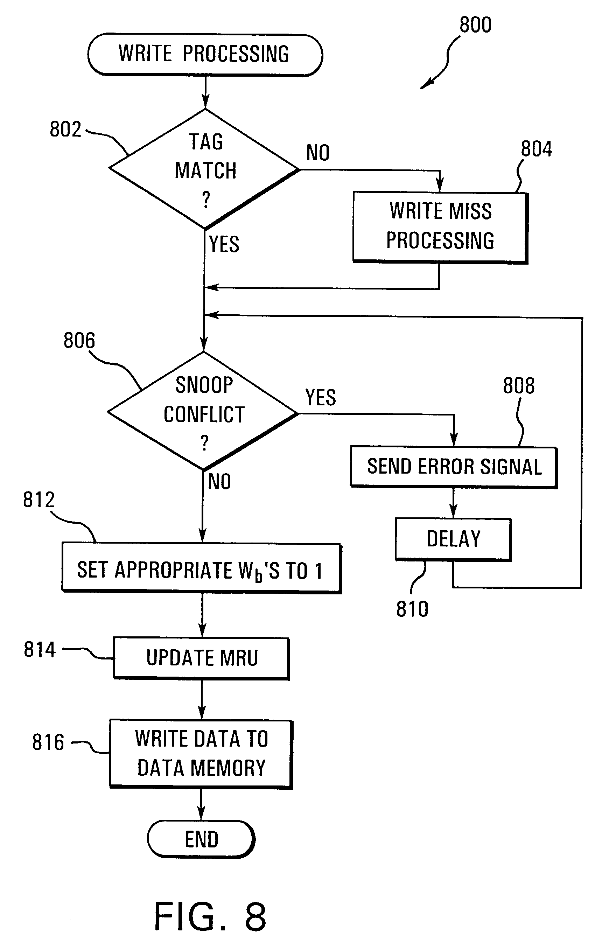

FIG. 8 is a flow diagram of write processing 800 according to an embodiment of the invention. The write processing is initiated when the cache controller 102 receives a write request from the processing unit.

The write processing 800 begins with a decision 802 that determines whether an address tag stored in the tag/control memory 106 matches the corresponding bits of the address of the write request. If there is no match, then write miss processing 804 is performed. The write miss processing 804 is described in detail below with reference to FIG. 9. On the other hand, the decision 902 determines that an address tag in the tag/control memory 106 does match the corresponding bits of the address of the write request, a write hit is deemed to have occurred and the write miss processing 804 need not be performed.

Next, a decision 806 determines whether a snoop conflict exists. If a snoop conflict does exist, an error signal is sent 808 to the processing unit. The presence of a snoop conflict with a write request by the processing unit is deemed an error condition because in this exemplary implementation there is only a single write port to the data memory 104 and, by definition, both the processing unit and the external device cannot both write to the data memory 104 in the same clock cycle. Following block 808, a delay 810 is provided so that the write request by the processing unit is delayed a clock cycle. Then, the write processing 800 returns to repeat the decision block 806. Once it is determined that no snoop conflict exists, the appropriate modification indicators (W_{b}) are set 812 to one. The MRU information in the MRU memory 110 is also updated 814 for the selected cache line of a set. Next, the data from the write request is written 816 to the data memory 104. After block 816, the write processing 800 is complete and ends. Preferably, the operations of blocks 812-816 are performed in a single clock cycle.

FIG. 9 is a flow diagram of write miss processing 900 according to an embodiment of the invention. The write miss processing 900 is preferably the processing carried out by the write miss processing 804 illustrated in FIG. 8. The write miss processing 900 initially selects 902 the cache set to be utilized. The selection 902 of the cache set was described in detail above with reference to FIG. 6.

Next, a decision 904 determines whether the modification indicator (W) is zero ( *W* = 0). If the modification indicator (W) is not zero, then one or more of the bytes within the selected cache line have been modified since being read from the main memory. Therefore, write back processing 906 is performed in this case. The write back processing 906 was described in detail above with reference to FIG. 7. On the other hand, if the modification indicator (W) is zero (*W* = 0), then no write back processing 900 is necessary and is therefore avoided. Next, following either block 904 or block 906, the address tag for the selected cache line is updated 908 by writing the tag associated with the write request to the appropriate entry in the tag/control memory 106. The read bit (R) is set 910 to zero (R = 0), and the modification indicator (W) is set 912 to zero ( *W* = 0). Hence, blocks 908-912 of the write miss processing 900 operate to designate a cache line for the memory location associated with the write request. The setting of the read bit (R) to zero and the modification indicator (W) to zero invalidates the cache line, but, as discussed with respect to FIG. 8, the write processing 800 will subsequently set the modification indicators (W_{b}) of the bytes actually written by the write request to one (*W* = *1*). Note that the block 912 is actually not needed, as blocks 904 and 906 already ensure that and the modification indicator (W) is zero.

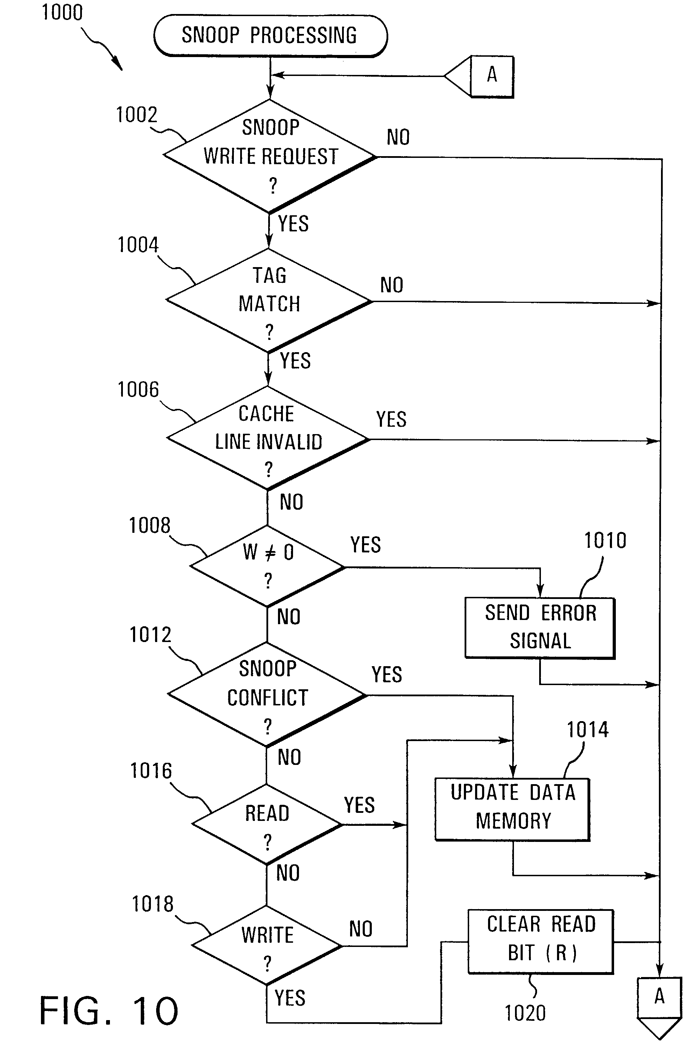

FIG. 10 is a flow diagram of snoop processing 1000 according to an embodiment of the invention. The snoop processing 1000 is performed by the cache controller 102 when a snoop request is received from an external device.

The snoop processing 1000 begins with a decision 1002 that determines whether the snoop request is a snoop write request. If the snoop request is not a snoop write request, then the snoop processing 1000 is complete and ends. Otherwise, when the snoop request is a write request, a decision block 1004 determines whether any of the address tags stored within the tag/control memory 106 match the appropriate bits of the address of the snoop write request. In the exemplary embodiment, the upper 13-bits of the address of the snoop request are compared to the tags corresponding to either of the sets. If not, then there is a snoop miss and the snoop processing 1000 is complete. Otherwise, there is a snoop hit and the snoop processing 1000 continues.

Next, a decision block 1006 determines whether the cache line is invalid. This is achieved by examining whether the read bit (R) and the modification indicator (W) for the cache line both equal zero. If the cache line is invalid, then the snoop processing 1000 is complete and ends. Otherwise, a snoop hit occurs and the snoop processing 1000 continues with a decision 1008 that determines whether the modification indicator (W) is not equal to zero (*W* ≠ 0). If the modification indicator (W) is not equal to zero, then an error signal is sent 1010 because this condition should not occur. In the exemplary implementation, a snoop hit in a cache line with modification indicators not all cleared is considered an error. Following the block 1010, the snoop processing 1000 is complete and ends. On the other hand, when the modification indicator (W) is equal to zero, the snoop processing 1000 continues with a decision 1012 that determines whether a snoop conflict exists. When a snoop conflict is determined to exist, the data memory 104 is updated 1014 in accordance with the snoop write request. Otherwise, when a snoop conflict is determined not to exist, a decision 1016 determines whether the processing unit is issuing a read request in the same cycle. If so, the data memory 104 is also updated 1014 in this case.

On the other hand, when the decision 1016 determines that the processing unit is not issuing a read request, a decision 1018 determines the processing unit is issuing a write request in the same clock cycle. If so, the read bit (R) is cleared 1020 (R = 0), thereby invalidating the cache line for the exemplary embodiment because it is an error to have both the external device and the processing unit writing to the same memory location in the same clock cycle. On the hand, if the processing unit is not issuing a write request, then the data memory 104 is updated 1014. Following blocks 1014 and 1020, the snoop processing 1000 is complete and ends, but loops back to the beginning of the snoop processing 1000 to repeat itself every cycle.

The cache controller 102 may also include maintenance modes. In one embodiment, these maintenance modes operate, for example, to properly initialize the cache memory system 100 when powered-up, to flush the cache, and to bypass the cache. Initialization at power-up places the cache memory system 100 in a disabled mode in which the cache memory storage is bypassed until the system writes data and address tags into the cache memory system 100. In a flush mode, the flushing of the cache essentially performs the write back processing 700 to write out the data from the data memory 104 of the cache memory system 100. For testing purposes, the ability to bypass the cache memory system 100 to directly reach the main memory is advantageous and facilitated by the disable mode.

Although the above-described embodiments use the byte validity memory 108 to store the modification indicators, in cases in which the depth of the data memory becomes large, it may be advantageous to implement the byte validity memory as a cache memory 108 such as a small set associative or fully associative cache.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

## Claims

1. A cache memory system, comprising:
a cache data storage for storing bytes of data, said cache data storage stores a plurality of cache blocks with each of the cache blocks including a plurality of the bytes of data;
a tag storage for storing an address tag for each of the cache blocks stored in said cache data storage;
a read indicator storage for storing a read indicator for each of the cache blocks stored in said cache data storage;
a modification indicator storage for storing a modification indicator for each byte within each of the cache blocks stored in said cache data storage; and
a cache controller, operatively connected to said cache data storage, said tag storage, said read bit storage and said modification indicator storage, for controlling read and write operations of said cache memory system.

2. A cache memory system as recited in claim 1, wherein said cache memory system is coupled between a processing unit and a main memory, and
wherein the modification indicator for each byte stored in said modification indicator storage is a valid bit, and the valid bit indicates whether or not the corresponding byte of data stored in said cache data storage has been modified since being read from the main memory.

3. A cache memory system as recited in claim 1, wherein the cache memory system has a first set of cache lines and a second set of cache lines, each of the cache lines of the first and second sets of cache lines have n cache line entries, and each of the n cache line entries stores a cache block, and
wherein said cache memory system further comprises:
a replacement indicator storage for storing an indicator as to which cache line of the corresponding pairs of cache lines of the first and second sets of n cache line entries has been most recently used.

4. A cache memory system as recited in claim 1, wherein said cache memory system is coupled between a processing unit and a main memory, and
wherein during a write request from the processing unit, said cache controller operates said cache memory system using a write allocate write-miss policy where following a write miss a cache line is allocated but the memory block in the main memory corresponding to the write request is not read into the cache memory system instead the bytes of the write request are written to the allocated cache line.

5. A cache memory system as recited in claim 4, wherein during a read request from the processing unit, said cache controller operates said cache memory system using a read-miss policy where following a read miss a cache line is allocated and the bytes of data within the memory block in the main memory that are requested by the read request are read first regardless of their position in the memory block so that the read request is satisfied early.

6. A cache memory system as recited in claim 1, wherein said cache memory system is coupled between a processing unit and a main memory, and
wherein said cache controller operates said cache memory system as a write back cache in which when writing back bytes of data from said cache data storage to the main memory only those bytes that have the corresponding modification indicator set are written back to the main memory.

7. A method for operating a cache memory system, the cache memory system includes data storage, tag storage, and modification indicator storage, the modification indicator storage stores modification indicators for each byte in the data storage, said method comprising the operations of:
(a) receiving a write request to write data from a given memory location;
(b) determining whether the memory location is in the cache memory system;
(c) when said determining (b) determines that the memory location is in the cache memory system, performing the operations of
(c1) writing the data of the write request to a cache block within the data storage that corresponds to the memory location, and
(c2) setting the modification indicators corresponding to the bytes of data written in the data storage in (c1); and
(d) when said determining (b) determines that the memory location is not in the cache memory system, performing the operations of
(d1) selecting a cache block to be removed from the cache memory system to make room in the cache memory system for the cache block associated with the memory location of the write request,
(d2) write back to main memory those bytes of data in the selected cache block that have the corresponding modification indicator set and then resetting the corresponding modification indicators,
(d3) writing the data of the write request to the cache block that corresponds to the memory location of the write request, and
(d4) setting the modification indicators corresponding to the bytes in the data storage written to in (d1).

8. A method as recited in claim 7, wherein said performing (d) does not read in any of the cache block from the main memory.

9. A method for operating a cache memory system, the cache memory system includes data storage, tag storage, and modification indicator storage, the modification indicator storage stores modification indicators for each byte in the data storage, said method comprising the operations of:
(a) receiving a read request to read data from a given memory location;
(b) determining whether the memory location is in the cache memory system;
(c) determining whether the requested bytes of data by the read request have their corresponding modification indicator set;
(d) when said determining (b) determines that the memory location is in the cache memory system and when said determining (c) determines that the requested bytes of data have their corresponding modification indicator set, performing the operations of
(d1) reading the requested bytes of data from a cache block within the cache memory system that corresponds to the memory location of the read request;
(e) when said determining (b) determines that the memory location is not in the cache memory system, performing the operations of
(e1) selecting a cache block to be removed from the cache memory system to make room in the cache memory system for the cache block associated with the memory location of the write request,
(e2) writing back to main memory those bytes of data in the selected cache block that have their corresponding modification indicator set and then resetting the corresponding modification indicators unless the memory location is in the selected cache block, and
(e3) subsequent to said writing (e2), reading the bytes of data for the entire selected cache block; and
(f) when said determining (b) determines that the memory location is in the cache memory system but the requested bytes of data do not have the corresponding modification indicator set, performing the operations of
(f1) reading only those bytes in the selected cache block that have the corresponding modification indicator reset when the memory location is in the selected cache block.

10. A method as recited in claim 7, wherein said reading (f1) first reads the requested bytes of data, then signals the requester that the requested bytes are available, and then reads the remaining bytes in the selected cache block that have the corresponding modification indicator reset.

11. A method as recited in claim 7, wherein said reading (e3) first reads the requested bytes of data, then signals the requester that the requested bytes are available, and then reads the remaining bytes in the selected cache block.
